# EUROPEAN PATENT SPECIFICATION

(11) **EP 3 745 372 B1**
(45) Date of publication and mention of the grant of the patent: **03.07.2024**
(21) Application number: 19810348.3
(22) Date of filing: 29.05.2019
(51) Int. Cl.: G08B 21/02, H02S 50/00, H02S 40/38, G08B 25/14, H02S 10/40

(54) **POSITION TRACKING DEVICE AND METHOD FOR PROVIDING LOW POWER GEOFENCE SERVICE**
POSITIONSVERFOLGUNGSVORRICHTUNG UND VERFAHREN ZUR BEREITSTELLUNG EINES GEOFENCE-DIENSTES MIT NIEDRIGEM LEISTUNGSVERBRAUCH
DISPOSITIF DE SUIVI DE POSITION ET PROCÉDÉ POUR FOURNIR UN SERVICE DE GÉOREPÉRAGE À FAIBLE PUISSANCE

(30) Priority: 30.05.2018 KR 20180062010; 20.06.2018 KR 20180070869; 28.05.2019 KR 20190062322
(43) Date of publication of application: 02.12.2020
(73) Proprietor: Amotech Co., Ltd., Incheon 21629 (KR)
(72) Inventor: BAEK, Hyungil, Yongin-si, Gyeonggi-do 17008 (KR); HWANG, Hoeyoung, Gunpo-si, Gyeonggi-do 15859 (KR); RYU, Kyunghyun, Seoul 03709 (KR); OH, Semin, Incheon 21624 (KR)
(74) Representative: V.O.
(86) International application number: PCT/KR2019/006426
(87) International publication number: WO 2019/231233

(56) References cited:
- EP-A1- 2 983 047
- JP-A- 2008 039 565
- KR-A- 20110 109 603
- KR-A- 20140 021 757
- KR-A- 20150 016 007
- KR-A- 20150 016 007
- KR-A- 20170 019 806
- KR-A- 20170 099 352
- US-A1- 2014 143 064

## Description

### BACKGROUND

### 1. Technical Field

The present invention relates a method and device of location tracking for providing low power consuming geo-fence service by using an indoor/outdoor location information based on solar charging module estimation, in detail, the present invention relates the method and device of location tracking for providing the low-power consuming geo-fence service by selecting a location tracking module based on the indoor/outdoor information decided by operation of the solar charging module.

Recently, the geo-fence service of location tracking device using the low-power communication have been proposed for the elderly people with dementia to prevent death or injury due to in-home departure and zone departure. In addition, the market for devices for providing such service and communication method targeting elderly people with dementia is expanding to pet and livestock.

### 2. Discussion of the Related Art

US2014/143064 discloses a personal monitoring system, including a processor; a cellular, WiFi, or Bluetooth transceiver coupled to the processor; an accelerometer or a motion sensor coupled to the processor; and a sensor coupled to the processor to sense mood, wherein text, image, sound, or video is rendered in response to the sensed mood. A global positioning system (GPS) receiver can be used to detect movement and where the person falls.
In general, the Geo-Fence is a compound word of Geographic and Fence, and refers to a virtual fence installed in a specific geographic area using a location-based service (LBS). The Geo-Fencing is an application program interface (API) that supports the virtual fence on a specific area.

The Geo-Fencing is an interface using a Global Positioning System (GPS), which is one of the location tracking technologies, and allows a user to check an access status of virtual fence by designating the virtual fence in the form of a circle or a square in the specific area through the GPS.

However, since the currently used Geo-Fence service is provided using a mobile communication network, a Bluetooth communication, or a Wireless Fidelity (WIFI) communication, the service fee is expensive, or the service is available only in the area where specific communication equipments are installed. Moreover, due to the limitation of the battery capacity of the location tracking device, there have been difficulties in expanding the service.

Accordingly, in order to overcome high cost, tracking distance, and limitation of battery capacity, devices and methods using low power location tracking method and communication method have been proposed.

An effective power consuming Geo-Fence service is needed through combining an advantage of low power communication network, a Soft Ware (SW) platform having compatibility for various data and an effective analysis engine of wearable device such as the location tracking device.

### SUMMARY

It is an object of the present invention to provide a location tracking device for geo-fence service, which has a solar charging module and an energy harvest module for self-power generation and applies a low-power communication method and location tracking modules.

In addition, it is an object of the present invention to provide a location tracking method for providing the low-power consuming geo-fence service by selecting a location tracking module based on the indoor/outdoor information decided by operation of the solar charging module.

To solve the above problem and defects, the present invention provides a device that is defined by the features of claim 1.

In an embodiment of the present invention , wherein control unit determines the communication module as the LPWAN module when a user of the location tracking device is in a normal situation, wherein the control unit determines the communication module as the UWB module when the user of the location tracking device is in an emergency situation.

According to the present invention, the control unit is configured to determine that the location of the location tracking device is outdoor when the solar charging module is a charging operation, wherein the control unit is configured to determine that the location of the location tracking device is indoor when the solar charging module is a non-charging operation.

In an embodiment of the present invention, wherein the LPWAN communication module transmits the locating tracking data through one of a Sigfox, a Long Range (LoRa), and a Narrow Band - Internet of Things (NB-IoT) communication network using a broadcasting communication method, wherein the UWB communication module transmits the locating tracking data through an LTE (Long-term evolution) mobile communication network using a bidirectional communication method that transmits a response message for the location tracking data.

To solve the above problem and defects, the present invention provides a method of location tracking for providing low power consuming geo-fence service in a location tracking device, comprising: detecting a Vrect value which is a reference value for determining a charging or a non-charging operation of the solar charging module; determining whether the solar charging module is charging operation or non-charging operation based on the detected the Vrect value; determining that a location of the location tracking device is outdoor and a location tracking data is obtained using a Global Positioning System (GPS) module when the solar charging module is in the charging operation; determining that a location of the location tracking device is indoor and a location tracking data is obtained using one of a Bluetooth Low Energy (BLE), a Wireless Fidelity (WIFI) Sniffing, and an Ultra-Wide Band (UWB) modules other than the GPS module when the solar charging module is in the non-charging operation; and transmitting the location tracking data through a Low Power Wide Area Network (LPWAN) communication module.

In an embodiment of the present invention, wherein the location tracking data is acquired using the GPS module, further comprising: determining whether the location tracking data obtained using the GPS module is stably obtained, and if the location tracking data is not stably obtained using the GPS module, determining the location of the location tracking device is indoor and obtaining the location tracking data using one of the BLE, the WIFI, and the UWB module.

In an embodiment of the present invention, wherein the location tracking data is acquired by one of the BLE, the WIFI, and the UWB module other than the GPS module, further comprising: determining whether location tracking data is stably obtained using the location tracking module used before determining the location of the location tracking device is indoor according to the solar charging module, searching other location tracking module which is most stably obtainable the location tracking data when the location tracking data is not stably obtained using the used location tracking module, and obtaining the location tracking data by the searched location tracking module, wherein the location tracking module which is the most stably obtainable the location tracking data has the least delay time and the least failure chances to obtain the location tracking data.

In an embodiment of the present invention, wherein the LPWAN communication module transmits the locating tracking data through one of a Sigfox, a Long Range (LoRa), and a Narrow Band - Internet of Things (NB-IoT) communication network using a broadcasting communication method.

In an embodiment of the present invention, the location tracking device includes status definitions that a Standby Status referring a standby state after the initialization of the location tracking device, a Sensor Sensing Status referring a state that measures a heart rate, a body temperature, and an acceleration, an Emergency Status referring a state of processing when the defined emergency situation is occurred, a Status Analysis referring a state of analyzing and managing information from each status, an Indoors/Outdoors detection referring a state of analyzing whether the location of the location tracking device is indoor or outdoor, an Indoor Status referring a state of processing and managing when the location of the location tracking device is indoor, an Outdoor Status referring a state of processing and managing when the location of the location tracking device is outdoor, an Indoor Interference Status referring a state of checking and observing the change of location data indoor, an Outdoor Interference Status referring a state of checking and observing the change of location data in the outdoor, a Geo-Fencing Control Status referring a state of processing when the user deviates from the geo-fence.

In an embodiment of the present invention, wherein the Vrect value is the reference value determining that the location tracking device is indoor and the reference value determining that the location tracking device is outdoor.

The effect of the present invention is to increase the power supply amount of the location tracking device by producing self-generation power of solar charging module and the energy harvesting module in the location tracking device, thereby providing long time geo-fence service in location tracking device.

That is, the location tracking module can be quickly selected according to the indoor/outdoor location information of the location tracking device to which the solar charging module is applied, thereby reducing power consumption for searching the location tracking module of the location tracking device.

In addition, the flexible battery to be accommodated in the body member, the first band member, and the second band member of the location tracking device can increase the battery size compared to a wearable device in which a general battery is embedded only in the body member.

### BRIEF DESCRIPTION OF THE DRAWINGS

FIG. 1 is a view showing a location tracking device according to an embodiment of the present invention.
FIG. 2 is an exploded perspective view of the location tracking device of FIG. 1
FIG. 3 is a block diagram of modules configured on a circuit board inside the body of the location tracking device according to the present invention.
FIG. 4 is a configuration diagram of a wireless power transmission unit included in the location tracking device according to the present invention.
FIG. 5 shows a power receiving antenna included in the wireless power transmission unit.
FIG. 6 is a diagram illustrating a flexible battery extracted from the location tracking device according to the present invention.
FIG. 7 is an exemplary view showing various patterns applied to the electrode assembly and the exterior material in the flexible battery of FIG. 6, and is a view showing various distances between adjacent valleys or hills of the exterior material in the flexible battery.
FIG. 8 is an enlarged view of the inside of the flexible battery of FIG. 6.
FIG. 9 is a state definition and various state transition diagrams for recognizing a situation of the location tracking device according to the present invention.
FIG. 10 is a flowchart of method for providing a low-power geo-fence service based on the location tracking device according to the present invention.
FIG. 11 is a flowchart of method for determining a location of the location tracking device of FIG. 1 to be outdoor and obtaining location tracking data using a GPS module.
FIG. 12 is a flowchart of method for determining location of the location tracking device of FIG. 1 to be indoor and obtaining location tracking data using any one of a BLE, a WIFI, and a UWB module.

### DETAILED DESCRIPTION OF THE EMBODIMENTS

Hereinafter, exemplary embodiments of the present disclosure will be described in detail with reference to the accompanying drawings, which will be readily apparent to those skilled in the art to which the present disclosure pertains. The present disclosure may be embodied in many different forms and is not limited to the embodiments described herein. In the drawings, portions not relating to the description are omitted for clarifying the present disclosure, and the same reference numerals are assigned to the same or similar components throughout the specification.

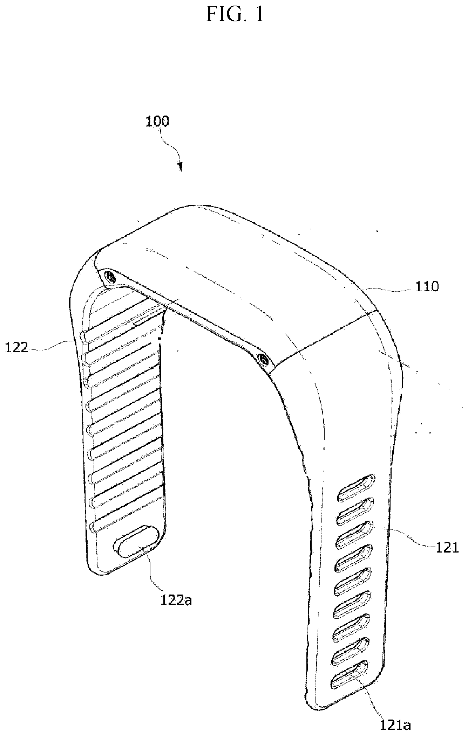

FIG. 1 is a view showing a location tracking device according to an embodiment of the present invention.

The present invention is based on a wearable location tracking device 100 based on the functional combination of low-power and long-time data transmission. The wearable location tracking device 100 may include an accelerometer 219 for detecting an emergency situation according to a sudden change of user's state and fall down.

The wearable location tracking device 100 includes a Global Positioning System (GPS) and one of a location tracking module selected among a Bluetooth Low Energy (BLE), a WIFI Sniffing, and an Ultra Wide Band (UWB). The wearable location tracking device may transmit a location tracking data using a IoT communication network or a real-time communication network according to situation analysis information. The location tracking device may include a solar charging module and an energy harvest module for self-power generation.

It is based on the functional combination of low-power and long-time data transmission, which is an advantage of the low power communication method and self-power generation.

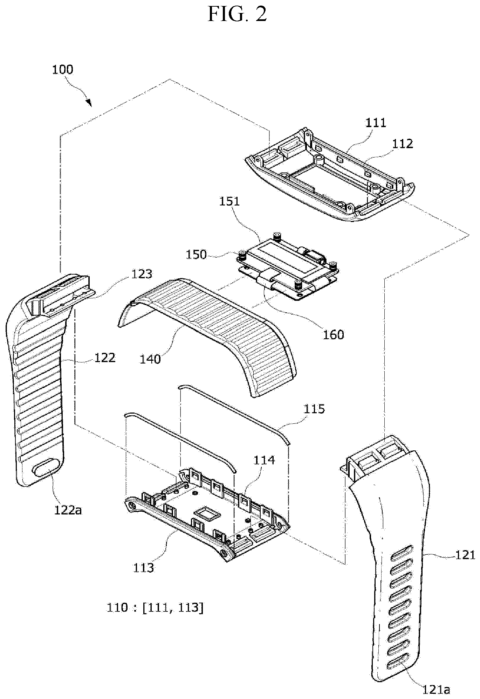

The location tracking device 100 according to an embodiment of the present invention, as shown in FIG 1 and 2 may include a body member 110, a first band member 121, a second band member 122 and a flexible battery 140.

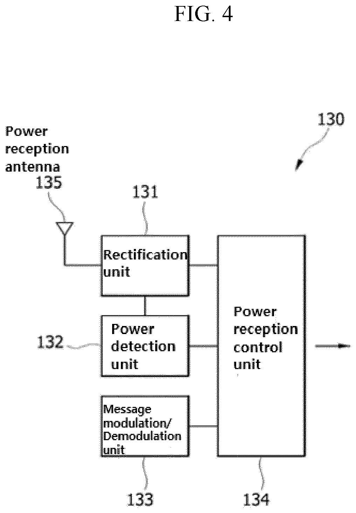

The body member 110 may have a circuit board including various modules for geo-fence service (FIG. 4). Accordingly, the user may be tracked while wearing the location tracking device 100 according to an embodiment of the present invention.

The body member 110 may include, for example, an upper portion 111 and a lower portion 113. The flexible battery 140 and modules to be described later may be located between the upper portion 111 and the lower portion 113. The coupling structure of the upper portion 111 and the lower portion 113 may, for example, form a locking jaw 112 on an inner surface of the upper portion 111 and a locking ring 114 on an inner surface of the lower portion 113.

The number and position of each of the locking jaws 112 and the locking rings 114 may correspond to each other one-to-one. In addition, fastening the upper portion 111 and the lower portion 113 with bolts may be to facilitate repair and maintenance and to improve the fastening force of the location tracking device 100 according to an embodiment of the present invention.

Meanwhile, a sealing ring 115 may be interposed between portions of the body member 110 in which the upper portion 111 and the lower portion 113 are in close contact with each other. The sealing 115 may be formed in line shape and may be positioned along a portion where the upper portion 111 and the lower portion 113 are in close contact. The material of the sealing 115 may be, for example, rubber, silicone and synthetic resin. The sealing 115 may seal a gap between the upper portion 111 and the lower portion 113 to prevent moisture or foreign substances from entering the body member 110 from the outside.

The first band member 121 and the second band member 122 may be respectively coupled to both ends of the body member 110.

The fastening structure of the first band member 121 and the second band member 122 may be, for example, to form a plurality of coupling holes 121a at regular intervals along the longitudinal direction of the first band member 121. Then, a coupling protrusion 122a may be formed on one side surface of the end of the second band member 122. Depending on the circumference of the user's wrist, the coupling protrusion 122a may be coupled to any one of the pluralities of coupling holes 121a.

However, the fastening structure of the first band member 121 and the second band member 122 may be not limited to the above structure, and any of the first band member 121 and the second band member 122 may be used as long as they are stably coupled to each other. Accordingly, the first band member 121 and the second band member 122 may be freely deformed by an external force to be in close contact with the user's wrist.

The material of the first band member 121 and the second band member 122 may be, for example, Thermoplastic Poly Urethane (TPU). Accordingly, the first band member 121 and the second band member 122 may be freely deformed by an external force to be in close contact with the user's wrist.

As described above, since the first band member 121 and the second band member 122 are made of TPU for the compression deformation by external force, the gap may be prevented from being generated in a portion coupled with the body member 110.

However, the first band member 121 and the second band member 122 are not limited to being the TPU, and may be any materials that are deformed by external force and restored to their initial shape.

A portion of the flexible battery 14 may be accommodated inside the body member 100, and the other ends of the flexible battery 14 may be accommodated inside the first band member 121 and the second band member 122.

For example, the middle portion of the flexible battery 140 may be accommodated in the body member 110. In addition, the other ends of the flexible battery 140 may be accommodated in each of the first band member 121 and the second band member 122. That is, one flexible battery 140 may be built to span the body member 110, the first band member 121, and the second band member 122.

With this structure, the length of the flexible battery 140 may be increased compared to a structure in which a general battery is embedded only in the body member 110. Therefore, the storage capacity of the flexible battery 140 may be also increased to increase the use time of the location tracking device 100 according to an embodiment of the present invention.

Meanwhile, each of the first band member 121 and the second band member 122 may include a receiving portion 123 in which a portion of an end of the flexible battery 140 is accommodated in a portion coupled to the body member 110.

The receiving portion 123 may be formed to have a size relatively larger than that of the flexible battery 140. This is to allow the flexible battery 140 to be freely deformed in the receiving portion 123.

The wrinkled portion of the flexible battery 140 may be freely bent along with deformation of the first band member 121 and the second band member 122. The flexible battery 140 for this may be made to have a length as an example. In addition, all or a portion of a portion accommodated in the receiving portion 123 in the flexible battery 140 may be formed to be wrinkled. For example, only the portion accommodated in the receiving portion 123 in the flexible battery 140 may be wrinkled.

In flexible battery 140, the first band member 121 and the second band member 122 among the portions accommodated in the first band member 121 and the second band member 122 may be deformed by an external force to form wrinkles.

Alternatively, in the flexible battery 140, a portion accommodated in the body member 110 may be plate-shaped, and the remaining portions may be formed to be wrinkled. Accordingly, since the entire thickness of the body member 110 may be reduced by a thickness increased by wrinkles in the flexible battery 140, the appearance of the location tracking device 100 according to an embodiment of the present invention may have a good shape and also improve a wearing sensation.

On the other hand, the location tracking device 100 according to an embodiment of the present invention in more detail, may include a wireless power transmission unit (see FIG. 4, 130), a circuit board 150 on which various modules are mounted, and a connecting member 160.

The wireless power transmission unit 130 may be located inside the body member 110 to receive wireless power to supply power to the flexible battery 140. That is, the above-described flexible battery 140 may be charged by the wireless power transmission unit 130. The method for the wireless power transmission unit 130 to receive power may be, for example, a magnetic resonance method or a magnetic induction method, but is not limited thereto, and any method may be used as long as it can receive power wirelessly.

The circuit board 150 may be located inside the body member 110 and positioned above the flexible battery 140. Various modules for operating the location tracking device 100 according to an embodiment of the present invention may be mounted on the circuit board 150.

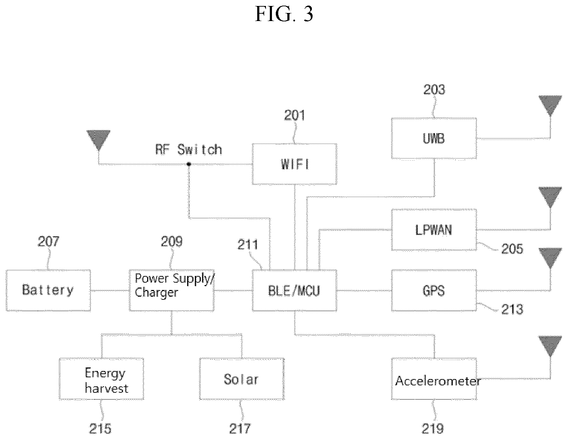

As shown in Figure 3, a WIFI 201, a UWB 203, a LPWAN 205, a GPS 213, a accelerometer 219, a BLE/MCU 211, a solar charging module, a battery 207, an energy harvest module 215, a power/charging 209 modules may be mounted in the circuit board 150. In addition, an overcharge protection circuit that prevents overcharging of the flexible battery 140 may also be mounted on the circuit board. In addition, the vibration unit 152 through which the user can feel vibration may be mounted on the circuit board 150.

The WIFI 201 may be a wireless local area net-work (WLAN) that converts a wired LAN transmission method to suit a wireless environment and can be used for location tracking when in an indoor environment.

The UWB 203 may be for a high-speed transmission of 500 Mbps, which is about 10 times the speed of a wireless LAN, which is about 54 Mbps. Therefore, the UWB 203 may be used to implement two-way services such as automotive Intelligent Transport System (ITS) communication and disaster rescue communication.

The battery 207, the flexible battery, and the energy harvesting device using a Peltier element may be provided as a separate power source for supplying auxiliary power to the circuit board.

The BLE 211 which is the location tracking communication method may be used for location tracking in the indoor environment.

The GPS 213 may be a satellite navigation system that receives the signal from a GPS satellite and used for location tracking in the outdoor environment.

The accelerometer 219 may be a device for measuring acceleration, and a means for detecting a sudden change in user behavior and grasping a fall-down or other emergency.

In one embodiment of the present invention, the solar charging module 217 may be for solar charging when the position of the location tracking device is in the outdoor state.

The energy harvest module 215 may be a module of producing self-power by using a change in body temperature of person or animal, and expand the amount of power of location tracking device 100 combined with the solar charging module 217 and the flexible battery 140.

The other control unit (MCU, 211) may be in charge of controlling all the modules in the location tracking device.

The control unit 211 of the location tracking device 100 may determine whether it is an emergency or a normal (or peaceful) situation based on information of situation recognition of the location tracking device 100. If it is determined that the situation is the normal, the LPWAN 205 module may be used to transmit the location tracking data of the location tracking device to the low-power communication network. Here, the low power communication network may be a Sigfox, Long Range (LoRa), and Narrow Band - Internet of Things (NB-IoT) communication network, use a broadcasting transmission method.

If it is determined that it is the emergency, the UWB module may be used to transmit the emergency message and the location tracking data of the location tracking device to network for real-time and bidirectional communication.

That is, by switching the communication method according to the situation, the location tracking data may be usually transmitted to the network in a low-power communication method. However, in the event of an emergency, the location tracking data may be transmitted to the network by switching to the real-time communication method even if the power consumption is high.

Therefore, in the outdoor state, the solar charging module 217 may be activated, and the charged power of solar charging module 217 may be provided to the location tracking device 100.

In addition, if the solar charging module 217 is in a charging situation by determining the charging/non-charging state based on the history value of the solar charging module 217, the location of the location tracking device 100 is determined in the outdoor.

When the location of the location tracking device 100 is in the outdoor, the GPS Module 213 may be used to measure the location value of the location tracking device to the network.

In addition, if the solar charging module 217 is in a non-charging situation by determining the charging/non-charging state based on the history value of the solar charging module 217, the location of the location tracking device 100 is determined indoor.

When the location of the location tracking device 100 is indoor, the one of the BLE 211, the WIFI 201 and the UWB 203 modules other than the GPS 213 module may be used for tracking the location data of the location tracking device.

The connecting member 160 may be electrically connected to the circuit board 150. One end of the connecting member 160 for this purpose may be coupled to the circuit board 150. In addition, the other end of the connecting member 160 may be positioned below the flexible battery 140.

The location tracking device 100 according to an embodiment of the present invention may include a display module 151. The display module 151 may be located on the circuit board 150. The display module 151 may display an operation state of the location tracking device 100 according to an embodiment of the present invention.

Meanwhile, for example, the display module 151 may be a flat display panel positioned at a predetermined distance from the upper portion 111 of the body member 110. Alternatively, the display module 151 may be a flexible display panel as another example.

At this time, the outer surface of the upper portion 111 of the body member 100 may be a curved surface. In addition, the inner surface of the upper portion 111 of the body member 110 may also be a curved surface. For example, a cover window may be formed on the outer surface of the upper portion 111.

The flexible display panel may be attached to the cover window in the curved state. Accordingly, by outputting an image in the curved state from the flexible display panel, the image may be output to the flexible display panel even if the user watches from various angles while wearing the location tracking device 100 according to an embodiment of the present invention. Since the flexible display panel is a known flexible display panel, detailed description thereof will be omitted.

In the location tracking device 100 according to an embodiment of the present invention described above, the upper portion 111 of the body member 100 from the top to the bottom, the display module 151, the circuit board 150, the flexible battery 170 and the lower portion 113 of the body member 110 may be sequentially positioned.

Meanwhile, the connection member 160 may be a flexible printed circuit board (FPCB).

Meanwhile, the aforementioned wireless power transmission unit 130 may receive power from an external power supply (not shown). Here, since the external power supply is a known wireless charger, detailed descriptions of the structure and operation process thereof may be omitted.

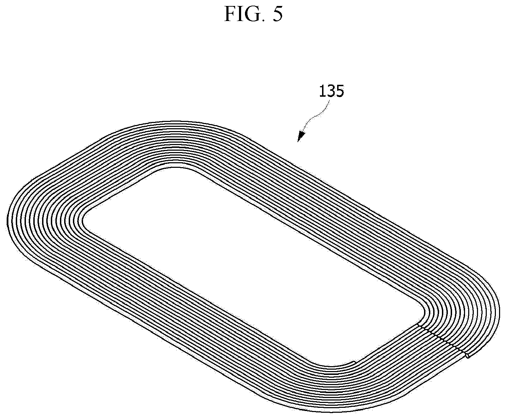

When the wireless power transmission unit 130 is described in more detail, as illustrated in FIG. 5, the wireless power transmission unit 130 may include, for example, a rectification unit 131, a power detection unit 132, and a message modulation/demodulation unit 133, a power reception control unit 134, and a power reception antenna 135.

The rectifying unit 131 may perform full-wave rectification to convert a wireless power signal in an Alternating Current (AC) state received from the power receiving antenna 135 into a Direct Current (DC). The rectifying unit 131 may further include a smoothing circuit for making the rectified current into a flat and stable direct current.

The power detection unit 132 may monitor the voltage or current of the power rectified by the rectification unit 131.

The message modulation/demodulation unit 133 may be used to demodulate the wireless power signal by the power reception control unit 134 and transmit the power control message signal.

The power reception control unit 134 may control each component included in the wireless power transmission unit 130.

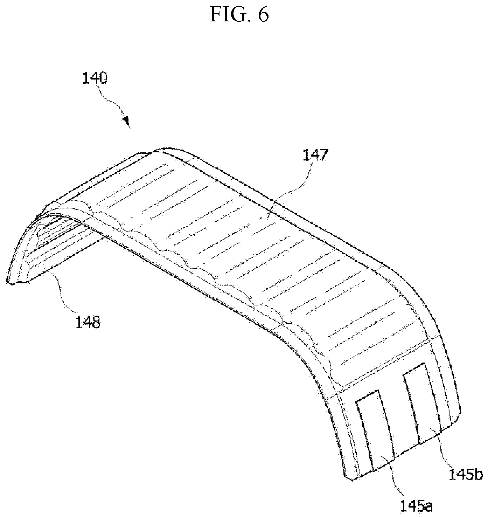

Referring to FIG. 6, the power receiving antenna 135 may be formed in various shapes and sizes according to the wireless charging method of the wireless power transmission unit 130.

The power receiving antenna 135 may be formed by patterning a conductor such as copper foil on at least one surface of the synthetic resin or forming a loop-shaped metal pattern using conductive ink.

For example, the power receiving antenna 135 may be, for example, a flexible printed circuit board antenna. The flexible printed circuit board antenna may be an antenna pattern printed on a flexible printed circuit board.

The power receiving antenna 135 may have a size similar to that of the circuit board 150 described above, or may be relatively smaller than the circuit board 150, but is not limited thereto.

The power receiving antenna 135 may have an overall shape in a film shape, and an adhesive layer may be formed on each of both sides. Accordingly, one surface of the receiving power antenna 135 may be attached to the connecting member 160, and the other surface may be attached to another adjacent member. To this end, the portion of the connection member 160 to which the power receiving antenna 135 is attached may be formed to have a size corresponding to the circuit board 150. With this structure, the assembly of the location tracking device 100 according to an embodiment of the present invention may be quickly implemented.

On the other hand, the location tracking device 100 according to an embodiment of the present invention, although not shown other than the antenna for wireless power transmission as described above, the location tracking device 100 may also be configured as a combo type that further includes at least one of an antenna for magnetic secure transmission (MST) and an antenna for near field communication (NFC).

In this case, the location tracking device 100 according to an embodiment of the present invention may include a shielding sheet 136. The shielding sheet 136 may be located between the power receiving antenna 135 and the flexible battery 140.

As described above, the shielding sheet 136 may be adhered to the power receiving antenna 135 by adhesion formed on one surface of the power receiving antenna 136. The shielding sheet 136 may shield the magnetic field generated by the radio signal induced by the antenna and focus in a desired direction.

The shielding sheet 136 may be a ferrite sheet or an amorphous sheet made of a plate-like member having a predetermined area, or a hybrid sheet formed by stacking them. The ferrite sheet may be made of a sintered ferrite sheet, and may be made of MnZn ferrite or NiZn ferrite.

In addition, the amorphous sheet may be a ribbon sheet including at least one of an amorphous alloy and a nanocrystalline alloy, and the ribbon sheet may be stacked in multiple layers, and the flakes processing may be performed by separated into a plurality of fine pieces, and the gaps between the separated fine pieces may be isolated by filling with an adhesive.

As described above, the location tracking device 100 according to the present invention may include the wireless power transmission unit 130 so that charging can be performed as long as it is located on the charging stand.

Accordingly, since the location tracking device 100 according to the present invention can be charged using the wireless charger without connecting the charging cable to the body member 110, unlike the conventional location tracking device, convenience in use can be improved.

In addition, in the conventional wired charging method, a charging port, which is an essential component for connecting the charging cable, does not have to be provided, thereby preventing failure due to foreign matter and moisture. In addition, the user may very easily handle and manage the location tracking device 100. In addition, the location tracking device 100 according to the present invention does not have the charging port through which the inside of the body member 110 is exposed to the outside, thereby improving the cohesiveness and easily implementing a structure for waterproofing.

In addition, since the location tracking device 100 according to the present invention can additionally utilize as much space as the space occupied by the charging port, the design freedom can be increased by adding additional functions or changing innovative design.

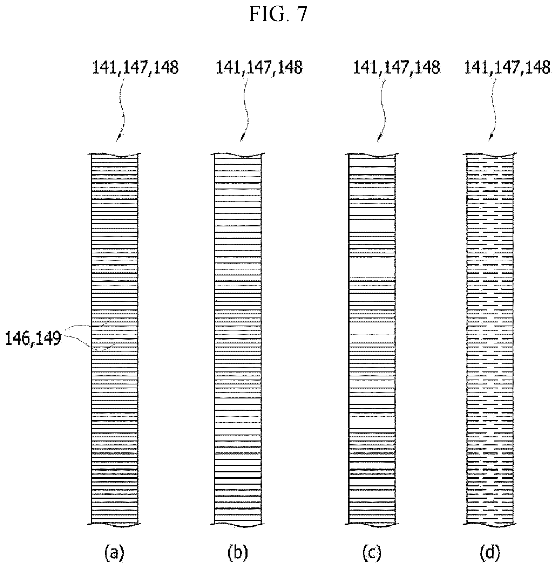

Meanwhile, referring to FIGS. 7 to 8, the above-described flexible battery 140 may include, for example, an electrode assembly 141 and exterior materials 147 and 148, and the electrode assembly 141 may include the exterior material 147 together with an electrolyte.

At this time, the electrode assembly 141 and the exterior materials 147 and 148 are provided with patterns 146 and 149 for contraction and relaxation in the longitudinal direction, respectively, and a first pattern formed on the exterior materials 147 and 148 and a second pattern 146 formed on the electrode assembly 141 may be provided to have the same directionality with each other.

Through this, since the amount of deformation of the base material constituting the electrode assembly 141 and the exterior materials 147 and 148 is prevented or minimized, the amount of deformation of the substrate itself that can occur in the bent portion is minimized. It is possible to prevent the electrode assembly 141 and the exterior materials 147 and 148 from being damaged or deteriorating.

In this case, the first pattern 149 and the second pattern 146 are arranged such that the first pattern 149 and the second pattern 146 may coincide with each other as well as the same directionality. This is to ensure that the first pattern 149 and the second pattern 146 always have the same moving.

In this way, the flexible battery 140 may be formed so that the patterns 146 and 149 for contraction and displacement in the longitudinal direction generated coincide with the electrode assembly 141 and the exterior materials 147 and 148, when bending is occurred. Even if the warp in the direction occurs, the electrode assembly 141 and the exterior materials 147 and 148 may be able to maintain a uniform spacing or contact state with respect to the entire length. Therefore, the electrolyte solution sealed together with the electrode assembly 141 may be uniformly distributed over the entire length, so that performance of the battery may be prevented from deteriorating.

To this end, the first pattern 149 and the second pattern 146 may be formed in a parallel direction to the width direction of the exterior portions 147 and 148 and the electrode assembly 141, respectively, and the exterior portions 147 and 148 and the electrode assembly 141 along the longitudinal direction may be alternately arranged in the hills and valleys. In addition, the hills and valleys constituting the first pattern 149 and the second pattern 146 may be formed at the same position, so that the first pattern 149 and the second pattern 146 may be coincide with each other.

In detail, the hills and valleys of the first pattern 149 and the second pattern 146 may be parallel direction to the straight lines parallel to the width direction of the exterior materials 147 and 148 and the electrode assembly 141. The hills and valleys of the first pattern 149 and the second pattern 146 may be repeatedly arranged along the longitudinal direction.

At this time, the patterns 246 and 149 may be continuously formed in a direction parallel to the width direction of the electrode assembly 141 and the exterior materials 147 and 148, or formed discontinuously. The pattern 246 and 149 may be formed for the entire length of the electrode assembly 141 and the exterior materials 147 and 148, or formed partially for some lengths.

For example, the patterns 146 and 149 of the flexible battery 140 may be formed in portions accommodated in the first band member 121 and the second band member 122. The patterns 146 and 149 of the flexible battery 140 may be formed only in portions where the first band member 121 and the second band member 122 are deformed by external force among the portions accommodated in the first band member 121 and the second band member 122.

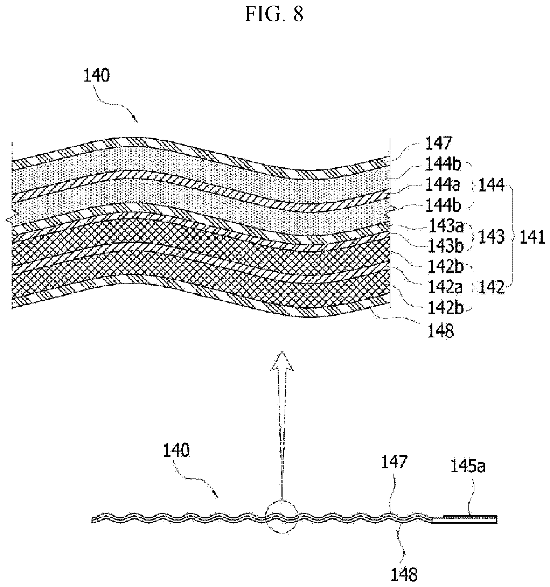

Returning to FIG. 8, the hill and valley portions may be provided to have a cross-section of various shapes in which an arc-shaped cross section including a semicircle, a polygonal cross section including a triangle or a square, and an arc-shaped cross section and a polygonal cross section may be mutually combined. Each of the peaks and valleys may be provided to have the same pitch and width, but may be provided to have different pitches and widths.

Through this, even if the exterior materials 147 and 148 and the electrode assembly 141 are embedded in a curved state, fatigue applied to itself may be reduced through the patterns 146 and 149.

On the other hand, the first pattern 149 and the second pattern 146 may be formed to have the same distance the interval between valleys adjacent to each other and the interval between hills adjacent to each other, or may be provided to have different intervals. The same interval and each other intervals may be provided in combination.

In addition, the first pattern 149 formed on the exterior materials 147 and 148 may be formed on the entire surface of the exterior materials 147 and 148, but may be partially formed. For example, as described above, the first pattern 149 may be formed only in portions accommodated in the first band member 121 and the second band member 122 in the exterior materials 147 and 148.

The electrode assembly 141 may be sealed with an electrolyte inside the exterior materials 147 and 148 and include an anode 142, a cathode 144, and a separator 143.

The positive electrode 142 may include a positive electrode current collector 142a and a positive electrode active material 142b, and the negative electrode 144 may include a negative electrode current collector 144a and a negative electrode active material 144b, and the positive electrode current collector 142a and the negative electrode current collector 144a may be implemented in the form of a sheet having a predetermined area.

That is, the positive electrode 142 and the negative electrode 144 may be provided for the entire area of the active materials 142b and 144b on one or both surfaces of each current collector 142a and 144a, or partially provided for some areas.

In addition, the positive electrode current collector 142a and the negative electrode current collector 144a may have negative electrode terminals 145a and positive electrode terminals 145b, respectively, for electrical connection with the outside. Here, the positive electrode terminal 145b and the negative electrode terminal 145a may be provided in a form extending from the positive electrode current collector 142a and the negative electrode current collector 144a to protrude on one side of the exterior bodies 147 and 148. Here, the positive electrode terminal 145b and the negative electrode terminal 145a may be provided to be exposed on the surfaces of the exterior materials 147 and 148.

At this time, the positive electrode active material 142b and the negative electrode active material 144b may contain a polytetrafluoroethylene (PTFE) component. This is to prevent the positive electrode active material 142b and the negative electrode active material 144b from peeling or cracking from the current collectors 142a and 144a during bending.

Meanwhile, the separator 143 disposed between the anode 142 and the cathode 144 may include a nanofiber web layer 143b on one or both surfaces of the nonwoven layer 143a.

Here, the nanofiber web layer 143b may be a nanofiber containing at least one selected from polyacylonitrile nanofibers and polyvinylidene fluoride nanofibers.

Preferably, the nanofiber web layer 143b may be composed of polyacrylic knit nanofibers only to ensure radioactivity and uniform pore formation.

The exterior materials 147 and 148 may be formed of a plate-shaped member having a predetermined area, and may be intended to protect the electrode assembly 141 from external force by receiving the electrode assembly 141 and an electrolyte therein.

To this end, since the exterior materials 147 and 148 may be provided with a pair of first exterior materials 147 and a second exterior material 148, and sealed through an adhesive along the rim, the electrolyte solution and the electrode assembly 141 accommodated therein are prevented from being exposed to the outside and prevented from leaking to the outside.

After the first exterior material 147 and the second exterior material 148 are composed of two members, the exterior materials 147 and 148 may be sealed with an edge portion constituting the sealing portion through an adhesive. The exterior materials 147 and 148 are made of a single member, and after being folded in half along the width direction or the length direction, the rest of the contact portions may be sealed through an adhesive.

The flexible battery 140 may be freely deformed by an external force by having the above-described structure.

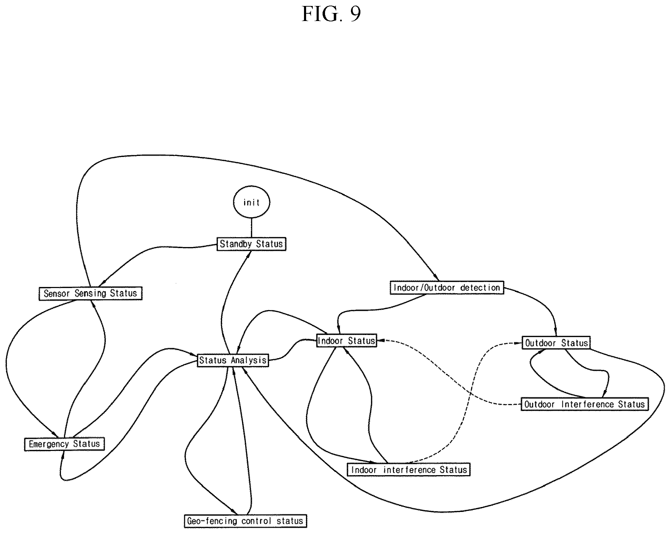

FIG. 9 is a state definition and various state transition diagrams for state recognition of the location tracking device 1 for the present invention.

Referring to FIG. 9, the Standby Status may refer a standby status after the initialization of the location tracking device 1, at which time a system check of the location tracking device 1 is performed.

A Sensor Sensing Status may refer a status that measures a heart rate, a body temperature, and an acceleration, and checks whether this state is an emergency or not.

An Emergency Status may refer a status of processing when the emergency state occurs according to the definition of the emergency.

A Status Analysis may mean a status that is in charge of analyzing and managing information from each status.

An Indoors/Outdoors detection may mean a location analysis on whether the location of the location tracking device 1 is in an indoor or an outdoor.

An Indoor Status may refer a status of processing and managing when the location of the location tracking device 1 is in the indoor.

An Outdoor Status may refer to a status of processing and managing when the location of the location tracking device 1 is in the outdoor.

An Indoor Interference Status may refer a status of checking and observing the change of location data in the indoor.

An Outdoor Interference Status may refer a status of checking and observing the change of location data in the outdoor.

A Geo-Fencing Control Status may refer a status in which a processing for the location tracking device 1 when the user leaves the geo-fence.

Referring to FIG. 9, all status can be transitioned to other status at any time or freely.

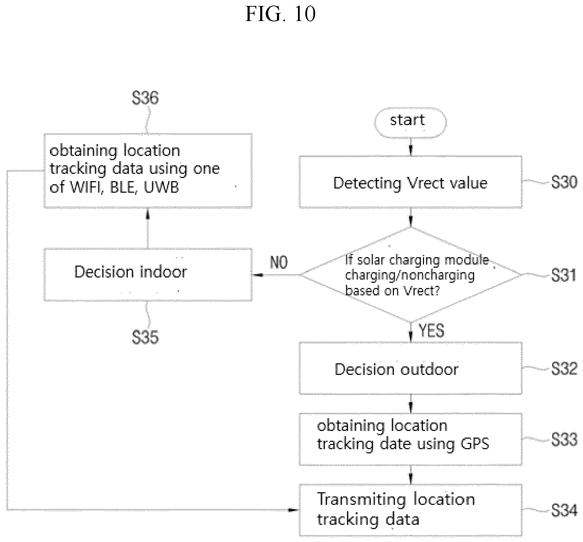

FIG. 10 is a flowchart of method for providing a low-power geo-fence service based on the location tracking device according to the present invention.

Based on the history value of the solar charging module 217 of the location tracking device 100, a Vrect value serving as a reference value for determining a charging/non-charging state of the solar charging module 217 may be decided (S30).

Here, the Vrect value may be a reference value to determine that the location of the location tracking device 100 is indoor or shaded area. The Vrect value may be a reference value to determine that the location of the location tracking device 100 is outdoor. The Vrect is decided by using various history values obtained from the solar charging module 217 of the location tracking device 100.

If the Indoor/Outdoor situation is determined based on the reference value Vrect, the location tracking module suitable for Indoor/Outdoor may be quickly selected, thereby reducing power consumption for searching the location tracking module of the location tracking device.

Based on the decided Vrect value, it is determined whether the solar charging module 217 of the location tracking device is in a charging/non-charging situation (S31).

If the solar charging module 217 of the location tracking device 100 is in a charging situation, it may be determined that the location of the location tracking device is outdoor (S32).

If the location of the location tracking device 100 is outdoor, the location tracking data is acquired using only the GPS module (S33).

However, if the solar charging module 217 of the location tracking device 100 is in a non-charging situation, it may be determined that the location of the location tracking device 100 is indoor (S35).

At this time, location tracking data is acquired by one of the BLE, the WIFI, and the UWB module other than the GPS module (S36).

The acquired location tracking data is transmitted to the network using the low-power communication method (S34).

The low-power communication method may be Sigfox, LoRa, or NB-IoT, and referred to as a low-power communication method of one-way broadcasting that does not transmit a response message for a received signal.

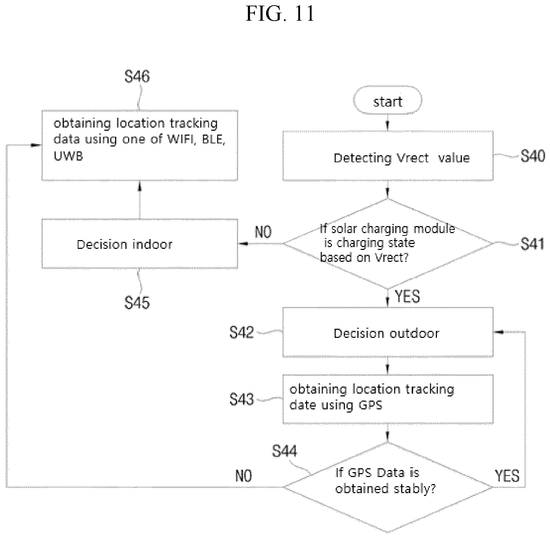

FIG. 11 is a flowchart showing a method for determining the location of the location tracking device 100 of FIG. 10 to be Outdoor and obtaining location tracking data using a GPS module.

Referring to FIG. 11, the step of determining that the location of the location tracking device 100 is outdoor may include the step of determining whether the location tracking data using the GPS module is detected stably (S44).

If the location tracking data is not stably detected, it may be determined that the location of the location tracking device 100 is indoor (S45).

At this time, location tracking data is acquired using one of the BLE, the WiFi, and the UWB module other than the GPS module (S46).

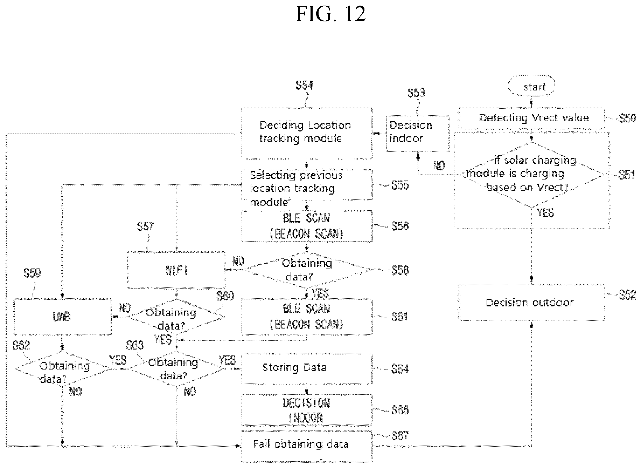

FIG. 12 is a flowchart of method for determining location of the location tracking device of FIG. 1 to be indoor and acquiring location tracking data using any one of the BLE, the WIFI, and the UWB module.

Referring to FIG. 12, if the location of the location tracking device 100 is indoor, the location tracking data is acquired using any one of the BLE, the WIFI, and the UWB modules other than the GPS module (S50 ~ S54).

If the location tracking data is not stably detected using the previously used location tracking module, the location tracking module is changed with the remaining other location tracking module (S56 ~ S65). The location tracking data may be acquired using the determined location tracking module (S64).

However, if the location tracking data is not stably obtained using the used location tracking module, location tracking module which is the most stably obtainable the location tracking data is searched such like an example of FIG 12. FIG. 12 shows a process of searching the location tracking module among the BLE, the WIFI, and the UWB.
The location tracking module which is the most stably obtainable the location tracking data may refer that the location tracking module can obtain the location tracking data most quickly without failure. If there is some delay or failure to obtain the location tracking data with the location tracking module, the module may be not stable to get the location tracking data in the location. That is, the location tracking module which is the most stably obtainable the location tracking data may have the least delay time and the least failure chances to obtain the location tracking data.

If the location tracking data may not be detected stably using the BLE, the WIFI, or the UWB module, it may be determined to be the outdoor and the location tracking data may be acquired using the GPS (S52).

As described above, the present disclosure has been described with respect to particularly preferred embodiments. However, the present disclosure is not limited to the above embodiments, and it is possible for one who has an ordinary skill in the art to make various modifications and variations, without departing off the scope of the claims.

## Claims

1. A wearable location tracking device (100) for providing low power consuming geo-fence service in a wireless network, comprising:
a body member (110);
a first band member (121) and a second band bend member (122);
a flexible battery (140) having a predetermined length, inserted into a receiving portion (123) of the first and second band members (121, 122), and disposed so that the remaining length except for the portion inserted in the receiving portion (123) is located inside the body member (110);
a solar charging module (217) for producing self-power; and
a circuit board including a control unit, MCU, (211) for controlling the location tracking device, and a communication module comprisising a Global Positioning System, GPS, module (213), and at least one of a Bluetooth Low Energy,BLE, (211), a Wireless Fidelity,WiFi, sniffing (201), an Ultra-Wide Band, UWB, module (203) and a Low Power Wide Area Network, LPWAN, (205) for a location tracking and communicating with a network;
wherein the control unit (211) switches the communication module according to a detected operation of the solar charging module (217),
wherein the control unit (211) is configured to determine that the location of the location tracking device (100) is outdoor and the location tracking data is obtained using the GPS module when the solar charging module (217) is in a charging operation
wherein the control unit (211) is configured to determine that the location of the location tracking device (100) is indoor and the location tracking data is obtained by one of the BLE, the WIFI, and the UWB module other than the GPS module when the solar charging module (217) is in a non-charging operation.

2. The device of claim 1, wherein control unit determines the communication module as the LPWAN module (205) when a user of the location tracking device (100) is in a normal situation,
wherein the control unit (211) determines the communication module as the UWB module (203) when the user of the location tracking device (100) is in an emergency situation.

3. The device according to claim 1, wherein when the location of the location tracking device (100) is in the outdoor, the GPS Module (213) is used to measure the location value of the location tracking device to the network; and
wherein when the location of the location tracking device (100) is indoor, one of the Bluetooth Low Energy (BLE, 211), the Wireless Fidelity (WIFI) sniffing (201) and the Ultra-Wide Band (UWB, 203) modules is used for tracking the location data of the location tracking device.

4. The device of claim 1, wherein the LPWAN communication module (205) transmits the locating tracking data through one of a Sigfox, a Long Range (LoRa), and a Narrow Band - Internet of Things (NB-IoT) communication network using a broadcasting communication method,
wherein the UWB communication module (203) transmits the locating tracking data through an LTE (Long-term evolution) mobile communication network using a bidirectional communication method that transmits a response message for the location tracking data.

5. A method of location tracking for providing low power consuming geo-fence service in a location tracking device (100), comprising:
detecting a Vrect value which is a reference value for determining a charging or a non-charging operation of the solar charging module (217);
determining whether the solar charging module is charging operation or non-charging operation based on the detected the Vrect value;
determining that a location of the location tracking device (100) is outdoor and a location tracking data is obtained using a Global Positioning System, GPS, module (213) when the solar charging module is in the charging operation;
determining that a location of the location tracking device is indoor and a location tracking data is obtained using one of a Bluetooth Low Energy, BLE, (211), a Wireless Fidelity, WiFi, sniffing (201), and an Ultra-Wide Band, UWB, modules (203) other than the GPS module (213) when the solar charging module (217) is in the non-charging operation; and
transmitting the location tracking data through a Low Power Wide Area Network, LPWAN, communication module (205).

6. The method of claim 5, wherein the location tracking data is acquired using the GPS module (213), further comprising:
determining whether the location tracking data obtained using the GPS module (213) is stably obtained, and
if the location tracking data is not stably obtained using the GPS module (213), determining the location of the location tracking device is indoor and obtaining the location tracking data using one of the BLE (211), the WIFI (201), and the UWB module (203).

7. The method of claim 6, wherein the location tracking data is acquired by one of the BLE (211), the WIFI (201), and the UWB module (203) other than the GPS module (213), further comprising:
determining whether location tracking data is stably obtained using the location tracking module used before determining the location of the location tracking device (100) is indoor according to the solar charging module (217),
searching other location tracking module which is most stably obtainable the location tracking data when the location tracking data is not stably obtained using the used location tracking module, and
obtaining the location tracking data by the searched location tracking module,
wherein the location tracking module which is the most stably obtainable the location tracking data has the least delay time and the least failure chances to obtain the location tracking data.

8. The method of claim 5, wherein the LPWAN communication module (205) transmits the locating tracking data through one of a Sigfox, a Long Range (LoRa), and a Narrow Band - Internet of Things (NB-IoT) communication network using a broadcasting communication method.

9. The method of claim 5, the location tracking device (100) includes status definitions that a Standby Status referring a standby state after the initialization of the location tracking device, a Sensor Sensing Status referring a state that measures a heart rate, a body temperature, and an acceleration, an Emergency Status referring a state of processing when the defined emergency situation is occurred, a Status Analysis referring a state of analyzing and managing information from each status, an Indoors/Outdoors detection referring a state of analyzing whether the location of the location tracking device is indoor or outdoor, an Indoor Status referring a state of processing and managing when the location of the location tracking device is indoor, an Outdoor Status referring a state of processing and managing when the location of the location tracking device is outdoor, an Indoor Interference Status referring a state of checking and observing the change of location data indoor, an Outdoor Interference Status referring a state of checking and observing the change of location data in the outdoor, a Geo-Fencing Control Status referring a state of processing when the user deviates from the geo-fence.

10. The method of claim 5, wherein the Vrect value is the reference value determining that the location tracking device (100) is indoor and the reference value determining that the location tracking device is outdoor.

## Patentansprüche

1. Anziehbare Standortverfolgungsvorrichtung (100) zum Bereitstellen eines Geofencing-Dienstes mit niedrigem Stromverbrauch in einem drahtlosen Netzwerk, umfassend:
ein Körperelement (110);
ein erstes Bandelement (121) und ein zweites Bandelement (122);
eine flexible Batterie (140) mit einer vorbestimmten Länge, die in einen Aufnahmeabschnitt (123) des ersten und zweiten Bandelements (121, 122) eingesetzt ist und so angeordnet ist, dass die verbleibende Länge mit Ausnahme des in den Aufnahmeabschnitt (123) eingesetzten Abschnitts innerhalb des Körperelements (110) angeordnet ist;
ein Solarlademodul (217) zum Erzeugen von Eigenstrom; und
eine Leiterplatte, die eine Steuereinheit, MCU, (211) zum Steuern der Standortverfolgungsvorrichtung und ein Kommunikationsmodul einschließt, das ein Globales-Positionsbestimmungssystem, GPS, -Modul (213) und mindestens eines von einem Bluetooth Low Energy, BLE, (211), einem Wireless Fidelity, WiFi, -Sniffer (201), einem Ultra-Breitband, UWB, -Modul (203) und einem Low Power Wide Area Network, LPWAN, (205) für eine Standortverfolgung und Kommunikation mit einem Netzwerk umfasst;
wobei die Steuereinheit (211) das Kommunikationsmodul entsprechend einem erfassten Betrieb des Solarlademoduls (217) schaltet,
wobei die Steuereinheit (211) konfiguriert ist, um zu bestimmen, dass sich der Standort der Standortverfolgungsvorrichtung (100) im Freien befindet und die Standortverfolgungsdaten unter Verwendung des GPS-Moduls erhalten werden, wenn sich das Solarlademodul (217) in einem Ladebetrieb befindet,
wobei die Steuereinheit (211) konfiguriert ist, um zu bestimmen, dass sich der Standort der Standortverfolgungsvorrichtung (100) in einem Innenraum befindet und die Standortverfolgungsdaten durch eines von dem BLE, dem WIFI und dem UWB-Modul, mit Ausnahme des GPS-Moduls, erhalten werden, wenn sich das Solarlademodul (217) in einem Nicht-Ladebetrieb befindet.

2. Vorrichtung nach Anspruch 1, wobei die Steuereinheit das Kommunikationsmodul als das LPWAN-Modul (205) bestimmt, wenn sich ein Benutzer der Standortverfolgungsvorrichtung (100) in einer normalen Situation befindet, wobei die Steuereinheit (211) das Kommunikationsmodul als das UWB-Modul (203) bestimmt, wenn sich der Benutzer der Standortverfolgungsvorrichtung (100) in einer Notfallsituation befindet.

3. Vorrichtung nach Anspruch 1, wobei, wenn sich der Standort der Standortverfolgungsvorrichtung (100) im Freien befindet, das GPS-Modul (213) zum Messen des Standortwertes der Standortverfolgungsvorrichtung an das Netzwerk verwendet wird; und
wobei, wenn sich der Standort der Standortverfolgungsvorrichtung (100) in einem Innenraum befindet, eines von dem Bluetooth Low Energy (BLE, 211), dem Wireless Fidelity, WiFi, -Sniffer (201), und dem Ultra-Breitband, UWB, -Modul (203) zum Verfolgen der Standortdaten der Standortverfolgungsvorrichtung verwendet wird.

4. Vorrichtung nach Anspruch 1, wobei das LPWAN-Kommunikationsmodul (205) die Standortverfolgungsdaten über eines der Kommunikationsnetze Sigfox, Long Range (LoRa) und Narrow Band - Internet of Things (NB-IoT) unter Verwendung eines Broadcasting-Kommunikationsverfahrens überträgt,
wobei das UWB-Kommunikationsmodul (203) die Standortverfolgungsdaten über ein LTE-Mobilkommunikationsnetz (Long Term Evolution) unter Verwendung eines bidirektionalen Kommunikationsverfahrens überträgt, das eine Antwortnachricht für die Standortverfolgungsdaten überträgt.

5. Verfahren zur Standortverfolgung zum Bereitstellen eines Geofencing-Dienstes mit niedrigem Stromverbrauch in einer Standortverfolgungsvorrichtung (100), umfassend:
Erfassen eines Vrect-Wertes, der ein Referenzwert zum Bestimmen eines Lade- oder Nichtladebetriebs des Solarlademoduls (217) ist;
Bestimmen, ob das Solarlademodul in dem Ladebetrieb oder in dem Nicht-Ladebetrieb ist, basierend auf dem erfassten Vrect-Wert;
Bestimmen, dass sich ein Standort der Standortverfolgungsvorrichtung (100) im Freien befindet und Standortverfolgungsdaten unter Verwendung eines Globalen-Positionsbestimmungssystem, GPS, -Moduls (213) erhalten werden, wenn das Solarlademodul in dem Ladebetrieb ist;
Bestimmen, dass sich ein Standort der Standortverfolgungsvorrichtung (100) in einem Innenraum befindet und Standortverfolgungsdaten unter Verwendung eines von einem Bluetooth Low Energy, BLE, (211), einem Wireless Fidelity, WiFi, -Sniffer (201), einem Ultra-Breitband, UWB, -Modul (203), das nicht das GPS-Modul (213) ist, erhalten werden, wenn sich das Solarlademodul (217) im Nicht-Ladebetrieb befindet; und
Übertragen der Standortverfolgungsdaten über ein Low Power Wide Area Network, LPWAN, Kommunikationsmodul (205).

6. Verfahren nach Anspruch 5, wobei die Standortverfolgungsdaten unter Verwendung des GPS-Moduls (213) erfasst werden, ferner umfassend:
Bestimmen, ob die unter Verwendung des GPS-Moduls (213) erhaltenen Standortverfolgungsdaten stabil erhalten werden, und
wenn die Standortverfolgungsdaten unter Verwendung des GPS-Moduls (213) nicht stabil erhalten werden, Bestimmen, dass sich der Standort der Standortverfolgungsvorrichtung in einem Innenraum befindet, und Erhalten der Standortverfolgungsdaten unter Verwendung eines von dem BLE (211), dem WIFI (201) und dem UWB-Modul (203).

7. Verfahren nach Anspruch 6, wobei die Standortverfolgungsdaten durch eines von dem BLE (211), dem WIFI (201) und dem UWB-Modul (203), das nicht das GPS-Modul (213) ist, erfasst werden, ferner umfassend:
Bestimmen, ob die Standortverfolgungsdaten stabil unter Verwendung des Standortverfolgungsmoduls erhalten werden, das vor dem Bestimmen verwendet wurde, dass sich der Standort der Standortverfolgungsvorrichtung (100) gemäß dem Solarlademodul (217) in einem Innenraum befindet,
Suchen eines anderen Standortverfolgungsmoduls, das die Standortverfolgungsdaten am stabilsten erhalten kann, wenn die Standortverfolgungsdaten unter Verwendung des verwendeten Standortverfolgungsmoduls nicht stabil erhalten werden, und
Erhalten der Standortverfolgungsdaten durch das gesuchte Standortverfolgungsmodul,
wobei das Standortverfolgungsmodul, das die Standortverfolgungsdaten am stabilsten erhalten kann, die geringste Verzögerungszeit und die geringste Fehlerwahrscheinlichkeit zum Erhalten der Standortverfolgungsdaten aufweist.

8. Verfahren nach Anspruch 5, wobei das LPWAN-Kommunikationsmodul (205) die Standortverfolgungsdaten über eines der Kommunikationsnetze Sigfox, Long Range (LoRa) und Narrow Band-Internet of Things (NB-IoT) unter Verwendung eines Broadcasting-Kommunikationsverfahrens überträgt.

9. Verfahren nach Anspruch 5, wobei die Standortverfolgungsvorrichtung (100) Statusdefinitionen einschließt, wonach sich ein Standby-Status auf einen Standby-Zustand nach der Initialisierung der Standortverfolgungsvorrichtung bezieht, ein Sensorerfassungsstatus sich auf einen Zustand bezieht, der eine Herzfrequenz, eine Körpertemperatur und eine Beschleunigung misst, ein Notfallstatus sich auf einen Verarbeitungszustand bezieht, wenn die definierte Notfallsituation eingetreten ist, eine Statusanalyse sich auf einen Zustand der Analyse und Verwaltung von Informationen aus jedem Status bezieht, eine Innen/Außen-Erkennung sich auf einen Zustand der Analyse bezieht, ob sich der Standort der Standortverfolgungsvorrichtung im Innen- oder Außenbereich befindet, ein Innenraum-Status sich auf einen Zustand der Verarbeitung und Verwaltung bezieht, wenn sich der Standort der Standortverfolgungsvorrichtung in einem Innenbereich befindet, ein Außenstatus sich auf einen Zustand der Verarbeitung und Verwaltung bezieht, wenn sich der Standort der Standortverfolgungsvorrichtung im Freien befindet, ein Außenstörungsstatus sich auf einen Zustand der Überprüfung und Beobachtung der Änderung von Standortdaten im Freien bezieht, ein Geofencing-Kontrollstatus sich auf einen Zustand der Verarbeitung bezieht, wenn der Benutzer von dem Geofence abweicht.

10. Verfahren nach Anspruch 5, wobei der Vrect-Wert der Referenzwert zum Bestimmen ist, dass sich die Standortverfolgungsvorrichtung (100) in einem Innenraum befindet, und der Referenzwert zum Bestimmen ist, dass sich die Standortverfolgungsvorrichtung im Freien befindet.

## Revendications

1. Dispositif de suivi de position (100) portable pour fournir un service de géorepérage à faible consommation dans un réseau sans fil, comprenant :
un élément de corps (110) ;
un premier élément de bande (121) et un second élément de bande (122) ;
une batterie flexible (140) ayant une longueur prédéterminée, insérée dans une partie de réception (123) des premier et second éléments de bande (121, 122), et disposée de telle manière que la longueur restante hors de la partie insérée dans la partie de réception (123) est située à l'intérieur de l'élément de corps (110) ;
un module de charge solaire (217) pour produire sa propre électricité ; et
une carte de circuit incluant une unité de commande, MCU, (211) pour commander le dispositif de suivi de position, et un module de communication comprenant un module de Système de Positionnement Global, GPS, (213), et au moins un d'un Bluetooth basse énergie, BLE, (211), un renifleur de Fidélité Sans Fil, WiFi, (201), un module Ultra Large Band, UWB, (203) et un réseau étendu basse puissance, LPWAN, (205) pour un suivi de position et communication avec un réseau ;
dans lequel l'unité de commande (211) commute le module de communication selon un état de fonctionnement détecté du module de charge solaire (217),
dans lequel l'unité de commande (211) est configurée pour déterminer que la position du dispositif de suivi de position (100) est à l'extérieur et les données de suivi de position sont obtenues en utilisant le module GPS quand le module de charge solaire (217) est dans un état de charge,
dans lequel l'unité de commande (211) est configurée pour déterminer que la position du dispositif de suivi de position portable (100) est à l'intérieur et les données de suivi de position sont obtenues par l'un du BLE, du WIFI, et du module UWB autres que le module GPS quand le module de charge solaire (217) est dans un état de non charge.

2. Dispositif selon la revendication 1, dans lequel l'unité de commande détermine le module de communication comme le module LPWAN (205) quand un utilisateur du dispositif de suivi de position (100) est dans une situation normale,
dans lequel l'unité de commande (211) détermine le module de communication comme le module UWB (203) quand l'utilisateur du dispositif de suivi de position (100) est dans une situation d'urgence.

3. Dispositif selon la revendication 1, dans lequel quand la position du dispositif de suivi de position (100) est à l'extérieur, le module GPS (213) est utilisé pour mesurer la valeur de position du dispositif de suivi de position au réseau ; et
dans lequel quand la position du dispositif de suivi de position (100) est à l'intérieur, l'un des modules Bluetooth basse énergie (BLE, 211), renifleur de Fidélité Sans Fil (WiFi, 201), et Ultra Large Band (UWB, 203) est utilisé pour rechercher les données de position du dispositif de suivi de position.

4. Dispositif selon la revendication 1, dans lequel le module de communication LPWAN (205) transmet les données de suivi de position par l'intermédiaire d'un réseau de communication Sigfox, Long Range (LoRa), et Internet des Objets à bande étroite (NB-IoT) en utilisant un procédé de communication par radiodiffusion,
dans lequel le module UWB (203) transmet les données de suivi de position par l'intermédiaire d'un réseau de communication mobile LTE (Long-term évolution) en utilisant un procédé de communication bidirectionnel qui émet un message de réponse pour les données de suivi de position.

5. Procédé de suivi de position pour fournir un service de Géorepérage à faible consommation dans un dispositif de suivi de position (100), comprenant :
de détecter une valeur Vrect qui est une valeur de référence pour déterminer un état de charge ou de non charge du module de charge solaire (217) ;
de déterminer si le module de charge solaire est en charge ou non en fonction de la valeur Vrect détectée ;
de déterminer qu'une position du dispositif de suivi de position (100) est à l'extérieur et que des données de suivi de position sont obtenues en utilisant un module de Système de Positionnement Global, GPS, (213) quand le module de charge solaire est dans l'état de charge ;
de déterminer qu'une position du dispositif de suivi de position et à l'intérieur et que des données de suivi de position sont obtenues en utilisant l'un d'un Bluetooth basse énergie, BLE, (211), d'un renifleur de Fidélité Sans Fil, WiFi, (201), et de modules Ultra Large Band, UWB, (203) autres que le module GPS (213) quand le module de charge solaire (217) est dans l'état de non charge ; et
de transmettre les données de suivi de position par l'intermédiaire d'un module de communication sur un réseau étendu basse puissance, LPWAN, (205).

6. Procédé selon la revendication 5, dans lequel les données de suivi de position sont acquises en utilisant le module GPS (213), comprenant en outre :
de déterminer si les données de suivi de position obtenues en utilisant le module GPS (213) sont obtenues stablement, et
si les données de suivi de position ne sont pas obtenues stablement en utilisant le module GPS (213), de déterminer que la position du dispositif de suivi de position est à l'intérieur et obtenir les données de suivi de position en utilisant le BLE (211), le WIFI (201), et le module UWB (203).

7. Procédé selon la revendication 6, dans lequel les données de suivi de position sont acquises par l'un du BLE (211), du WIFI (201), et du module UWB (203) autre que le module GPS (213), comprenant en outre :
de déterminer si les données de suivi de position sont obtenues stablement en utilisant le module de suivi de position utilisé avant de déterminer que la position du dispositif de suivi de position (100) est à l'intérieur selon le module de charge solaire (217),
de chercher un autre module de suivi de position qui peut obtenir plus stablement les données de suivi de position quand les données de suivi de position ne sont pas obtenues stablement en utilisant le module de suivi de position utilisé, et
d'obtenir les données de suivi de position par le module de suivi de position recherché,
dans lequel le module de suivi de position qui permet d'obtenir le plus stablement les données de suivi de position a le moins de retard et le moins de risques d'échec dans l'obtention des données de suivi de position.

8. Procédé selon la revendication 5, dans lequel le module de communication LPWAN (205) transmet les données de suivi de position par l'intermédiaire d'un réseau de communication Sigfox, Long Range (LoRa), et Internet des Objets à bande étroite (NB-IoT) en utilisant un procédé de communication par radiodiffusion.

9. Procédé selon la revendication 5, le dispositif de suivi de position (100) inclut des définitions d'état d'un Etat de Veille se référant à un état de veille après l'initialisation du dispositif de suivi de position, un Etat de Détection de Capteur se référant à un état qui mesure un rythme cardiaque, une température corporelle, et une accélération, un Etat d'Urgence se référant à un état de traitement quand la situation d'urgence définie survient, une Analyse d'Etat se référant à un état d'analyse et de gestion des informations de chaque statut, une détection Intérieur/Extérieur se référant à un état d'analyse de si la position du dispositif de suivi de position est à l'intérieur ou à l'extérieur, un Etat Intérieur se référant à un état de traitement et de gestion quand la position du dispositif de suivi de position est à l'intérieur, un Etat Extérieur se référant à un état de traitement et de gestion quand la position du dispositif de suivi de position est à l'extérieur, un Etat d'Interférence Intérieure se référant à un état de vérification et d'observation du changement des données de position à l'intérieur, un Etat d'Interférence Extérieure se référant à un état de vérification et d'observation du changement des données de position à l'extérieur, un Etat de commande de Géorepérage se référant à un Etat de traitement quand l'utilisateur dévie du géorepérage.

10. Procédé selon la revendication 5, dans lequel la valeur Vrect est la valeur de référence déterminant que le dispositif de suivi de position (100) est à l'intérieur et la valeur de référence déterminant que le dispositif de suivi de position est à l'extérieur.
